# EUROPÄISCHE PATENTSCHRIFT

(11) **EP 3 720 007 B1**
(45) Veröffentlichungstag und Bekanntmachung des Hinweises auf die Patenterteilung: **07.06.2023**
(21) Anmeldenummer: 20158788.8
(22) Anmeldetag: 21.02.2020
(51) Int. Cl.: H04B 3/54

(54) **HEADEND-GRUPPE, REPEATER UND POWERLINE-SYSTEM**
HEAD END GROUP, REPEATER AND POWERLINE SYSTEM
GROUPE HEADEND, RÉPÉTEUR ET SYSTÈME DE LIGNE ÉLECTRIQUE

(30) Priorität: 03.04.2019 DE 102019204731
(43) Veröffentlichungstag der Anmeldung: 07.10.2020
(73) Patentinhaber: Power Plus Communications AG, 68167 Mannheim (DE)
(72) Erfinder: Flicker, Jürgen, 69259 Wilhelmsfeld (DE)
(74) Vertreter: Patentanwälte Bauer Vorberg Kayser

(56) Entgegenhaltungen:
- EP-A1- 2 938 004
- EP-A1- 3 107 219

## Beschreibung

Die Erfindung betrifft eine Headend-Gruppe, einen Repeater zum Verbinden mit dieser Headend-Gruppe sowie ein Powerline-System umfassend diese Headend-Gruppe.

Bei Powerline-Communication, auch kurz als Powerline oder PLC bezeichnet, wird ein Energieversorgungsnetzwerk für das Übertragen von Daten genutzt. Die Breitbandvariante ist als Breitband-Powerline (BPL) bekannt. Es sind Systeme für die Anwendung innerhalb von Gebäuden verfügbar, aber auch Systeme, die eine Verbindung zwischen Gebäuden und/oder über große Distanzen ermöglichen. Seit einigen Jahren wird Powerline auch verstärkt für Kommunikationsverbindungen über Mittelspannungsstrecken (d.h. Teilabschnitte eines Energieversorgungsnetzwerks mit Spannungen über 1 kV und bis zu 52 kV) genutzt, die sich sogar für Verbindungen zu Backbone-Netzen eignen. Generell werden bei Powerline die zu übertragenden Daten in Powerline-Signale kodiert, die beispielsweise einen Frequenzbereich zwischen 1 und 100 MHz nutzen. Die Powerline-Signale werden mittels eines Kopplers in das Energieversorgungsnetzwerk eingekoppelt bzw. aus dem Energieversorgungsnetzwerk ausgekoppelt. Die Powerline-Signale werden zwischen Phase und Neutralleiter oder zwischen zwei Phasen übertragen. Die Daten sind meist in Powerline-Rahmen paketiert.

Eine (Breitband-)Powerline-Struktur ist üblicherweise in einer oder mehreren Powerline-Zellen organisiert, die jeweils von einem Headend verwaltet werden. Das Headend stellt dabei auch eine Verbindung zu einem Uplink-Netzwerk, beispielsweise einem Backbone-Netzwerk, her. Da Powerline-Signale bei der Übertragung über das Energieversorgungsnetzwerk üblicherweise relativ stark gedämpft und/oder anderweitig beeinflusst werden, sind meist mehrere Repeater vorhanden, die Powerline-Signale aus dem Energieversorgungsnetzwerk empfangen, aufbereiten und wieder in das Energieversorgungsnetzwerk senden können. Ein Repeater kann durch einen dedizierten Powerline-Knoten gebildet sein. Allerdings können auch "gewöhnliche" Powerline-Knoten, wie beispielsweise ein Powerline-Modem, einen derartigen Repeater bilden.

Derartige (Breitband-)Powerline-Strukturen werden aufgebaut, um unterschiedliche Dienste in dem Energieversorgungsnetzwerk anbieten zu können. Im Niederspannungsbereich (d.h. bei Wechselspannungen bis 1 kV, beispielsweise 120 V oder 230V) können diese Dienste beispielsweise Zählerfernauslesung, der Betrieb von Ladesäulen für Elektromobilität oder das Einsammeln von Daten von Sensoren zur Steuerung von regelbaren Ortsnetztransformatoren sein, um lediglich einige Anwendungsszenarien zu nennen. Zentrale Einheiten einer Powerline-Struktur (insbesondere Headend(s) und (dedizierte) Repeater) sind häufig in Trafostationen oder anderen zentralen Punkten eines Energieversorgungsnetzwerks installiert. Wenn eine Anbindung einer Trafostation an den Backbone benötigt wird, werden unter anderem Glasfaser-, drahtlose oder DSL-Verbindungen, aber auch die bereits angesprochenen Verbindungen über Mittelspannungs-Powerline eingesetzt. Ein Ausfall einer Backbone-Verbindung bedeutet, dass alle dahinterliegenden Hosts nicht mehr erreicht werden können bzw. diese Hosts ihre Daten nicht mehr an die entsprechenden Zielknoten zur Weiterverarbeitung schicken können.

Mittelspannungsverbindungen sind häufig hintereinandergeschaltet, sodass Headend-Repeater-Ketten entstehen. Wenn eines der Headends oder einer der Repeater in dieser Kette ausfällt, ist die Kette aufgebrochen und eine Kommunikationsverbindung insgesamt gestört. Zum Vermeiden von Ausfällen, sind verschiedene Möglichkeiten aus dem Stand der Technik bekannt.

Entsprechend dem typischen Aufbau von Mittelspannungsnetzen als offen betriebener Mittelspannungsring kann ein Powerline-Ring auf diesem Mittelspannungsring aufgebaut werden, wodurch sich eine Redundanz ergibt. Beispielsweise werden die Daten in einem Normalbetrieb immer im Uhrzeigersinn durch den aus Ketten von Mittelspannungsverbindungen bestehenden Ring geschickt. Bei einer Unterbrechung im Ring laufen die Daten nur noch bis zur Trennstelle. An einem zentralen Einspeisepunkt erkennen Komponenten (insbesondere Switche), dass die Daten nicht mehr durch den kompletten Ring laufen, und schicken die Daten nun zusätzlich im Uhrzeigersinn. Somit kommen die Daten jeweils von beiden Seiten bis zur Trennstelle. Nachteilig an dieser Ausgestaltung ist, dass der gesamte Ring mit Powerline-Komponenten ausgestattet sein muss. Dies erzeugt nicht unerhebliche Kosten. Ferner ist diese Lösung nur bei einer einzigen Trennstelle in dem gesamten Ring in der Lage, eine Kommunikationsfähigkeit für die meisten Powerline-Knoten aufrecht zu erhalten.

Aus der EP 2 961 077 A1 ist eine andere Möglichkeit bekennt, eine gewisse Redundanz zu schaffen. Hierzu werden auf Mittelspannungskabeln gebildete Kanäle separat betrieben. Eine Steuereinheit verbindet einen Ethernet-Anschluss (beispielsweise zu einem Backbone-Netzwerk) mit Modems, die jeweils einem Mittelspannungskabel zugeordnet sind. Je nach Kommunikationsfähigkeiten auf den jeweiligen Mittelspannungskabeln verteilt die Steuereinheit einen Datenstrom über die einzelnen Mittelspannungskabel. Dadurch kann bei Ausfall eines Kommunikationskanals eine Kommunikationsverbindung aufrechterhalten werden. Allerdings bleibt auch in dieser Ausgestaltung die Gefahr, dass einzelne Komponenten und damit die Powerline-Strecke insgesamt ausfallen.

Die US 2011/0140911 A1 offenbart ein System, bei dem Redundanz durch einen hohen Grad an Vermaschung einzelner Teilnetze entsteht. Dabei werden verschiedene Netzwerktechnologien kombiniert. Allerdings ist der dafür notwendige Aufwand erheblich. Ferner werden jeweils spezielle Repeater-Knoten benötigt, die die Kosten weiter erhöhen.

Die EP 3 107 219 A1 offenbart ein System und ein Verfahren zum redundanten Anbinden eines Daten erzeugenden Geräts an ein Backbone-Netzwerk. Das System umfasst mehrere Uplink-Knoten, die erzeugte Daten über ein Primärnetzwerk an das Backbone-Netzwerk leiten können. Sofern das Primärnetzwerk nicht oder nicht mit ausreichender Qualität zur Verfügung steht, können die Uplink-Knoten über eine weitere Schnittstelle auf ein Sekundärnetzwerk auf Basis von Powerline zurückgreifen. Für die Datenkommunikation in dem Sekundärnetzwerk können die Uplink-Knoten entweder in einem Headend-Modus oder in einem Repeater-Modus betrieben werden. Die Uplink-Knoten handeln untereinander aus, ob der Headend- oder der Repeater-Modus aktiviert wird. Wenn ein Uplink-Knoten im Headend-Modus weitgehend oder vollständig seine Verbindung zum Primärnetzwerk verliert, wechselt er in den Repeater-Modus und informiert die weiteren Uplink-Knoten hierüber mittels einer Broadcast-Nachricht. Einer der weiteren Uplink-Knoten wechselt dann in den Headend-Modus und übernimmt die Verwaltung der Powerline-Zelle.

Die EP 2 938 004 A1 offenbart ein Headend für ein Powerline-Netzwerk. Das Headend verwaltet in einem Normalbetrieb eine Powerline-Zelle und leitet Datenpakete zwischen Powerline-Netzwerk und Backbone-Netzwerk weiter. Wenn das Headend einen Ausfall der Verbindung zum Backbone-Netzwerk erkennt, schaltet das Headend seine Verwaltungsfunktion der Powerline-Zelle ab und wechselt in einen Repeater-Modus. Auf diese Weise können Datenpakete weiter über das Powerline-Netzwerk transportiert und durch ein anderes Headend in das Backbone-Netzwerk geleitet werden.

Der vorliegenden Erfindung liegt die Aufgabe zugrunde, Mittel anzugeben, mit denen eine einfache und möglichst kostengünstige Redundanz bei einer Kommunikation über Powerline geschaffen werden kann. Insbesondere soll eine Headend-Gruppe, ein Repeater und ein Powerline-System angegeben werden, das diesen Anforderungen genügt.

Erfindungsgemäß wird die voranstehende Aufgabe durch die Merkmale des Anspruches 1 gelöst. Danach umfasst die in Rede stehende Headend-Gruppe ein erstes Headend und ein redundantes Headend, wobei das erste Headend und das redundante Headend jeweils eine Powerline-Schnittstelle und eine Netzwerk-Schnittstelle aufweisen, wobei die Powerline-Schnittstellen zum Austausch von Powerline-Signalen über ein Energieversorgungsnetzwerk ausgebildet sind, wobei die Netzwerk-Schnittstellen zum Austausch von Datenpaketen über ein Netzwerk ausgebildet sind, wobei das erste Headend zum Verwalten einer in dem Energieversorgungsnetzwerk gebildeten Powerline-Zelle ausgebildet ist, wobei das redundante Headend dazu ausgebildet ist, unter Nutzung seiner Powerline-Schnittstelle und/oder seiner Netzwerk-Schnittstelle und durch Überprüfen einer Kommunikationsfähigkeit des ersten Headends einen Ausfall der Kommunikationsfähigkeit des ersten Headends zu erkennen und bei Erkennen des Ausfalls der Kommunikationsfähigkeit ein Verwalten der Powerline-Zelle zu übernehmen.

Hinsichtlich eines Repeaters, der zum Verbinden mit einer erfindungsgemäßen Headend-Gruppe ausgebildet ist, ist die voranstehende Aufgabe durch die Merkmale des Anspruchs 8 gelöst. Danach weist der in Rede stehende Repeater eine Powerline-Schnittstelle und eine Netzwerk-Schnittstelle auf, wobei der Repeater dazu konfiguriert ist, sich über seine Powerline-Schnittstelle bei einem primären Headend oder bei einem sekundärer Headend anzumelden, wobei das primäre Headend vorzugsweise durch das erste Headend der Headend-Gruppe und das sekundäre Headend vorzugsweise durch das redundante Headend der Headend-Gruppe gebildet ist, wobei sich der Repeater bei Erreichbarkeit des primären Headends bei dem primären Headend und bei Nicht-Erreichbarkeit des primären Headends bei dem sekundären Headend anmeldet.

Hinsichtlich eines Powerline-Systems für ein Energieversorgungsnetzwerk ist die voranstehende Aufgabe durch die Merkmale des Anspruchs 10 gelöst. Danach umfasst das in Rede stehende Powerline-System mehrere Powerline-Teilstrecken, die jeweils auf Teilabschnitten des Energieversorgungsnetzwerks ausgebildet sind und jeweils mindestens zwei Knotenstationen innerhalb des Energieversorgungsnetzwerks durch Powerline-Kommunikation kommunizierend miteinander verbindet, wobei mindestens eine der Powerline-Teilstrecken umfasst:
eine erfindungsgemäße Headend-Gruppe, wobei das erste Headend oder das redundante Headend der Headend-Gruppe eine auf der Powerline-Teilstrecke gebildete Powerline-Zelle verwaltet, und
mindestens einen Repeater, der entfernt von der Headend-Gruppe angeordnet ist und ein aus dem Energieversorgungsnetzwerk empfangenes Powerline-Signal aufbereitet und weiterleitet, wobei sich der mindestens eine Repeater an der Headend-Gruppe anmeldet.

In erfindungsgemäßer Weise ist zunächst erkannt worden, dass die Betriebssicherheit von Powerline dadurch besonders effektiv erhöht werden kann, wenn ein eine Powerline-Zelle verwaltendes Headend durch eine Headend-Gruppe ersetzt wird. Eine Headend-Gruppe besteht dabei aus einem ersten Headend und einem redundanten Headend. Das erste Headend übernimmt in einem Normalbetrieb die Verwaltung einer ihm zugeordneten Powerline-Zelle. Dadurch ist es möglich, für das erste Headend ein am Markt verfügbares Headend zu nutzen, ohne dass Veränderungen an diesem Headend notwendig wären. Das redundante Headend kann ebenfalls durch ein konventionelles Headend gebildet sein, in dem jedoch einige Zusatzfunktionen implementiert sind. Das redundante Headend muss nämlich dazu ausgebildet sein, die Kommunikationsfähigkeit des ersten Headends zu überprüfen und bei Erkennen eines Ausfalls der Kommunikationsfähigkeit des ersten Headends die Verwaltung der Powerline-Zelle zu übernehmen. Auf diese Weise kann mit relativ geringem Zusatzaufwand eine Redundanz geschaffen werden, bei der Ausfallzeiten der Kommunikation minimal gehalten werden können. Da sich Powerline-Knoten üblicherweise bei dem am besten erreichbaren Headend anmelden, ist es für die meisten Powerline-Knoten unerheblich, ob das erste Headend oder das redundante Headend die Verwaltung der Powerline-Zelle übernommen hat. Dadurch bleibt die Kommunikationsfähigkeit der Powerline-Knoten innerhalb der Powerline-Zelle bestehen, auch wenn das erste Headend ausfallen sollte.

Das erste Headend und das redundante Headend weisen jeweils eine Powerline-Schnittstelle und eine Netzwerk-Schnittstelle auf. Die Powerline-Schnittstelle wird zum Austausch von Powerline-Signalen mit dem Energieversorgungsnetzwerk genutzt. Dabei wird die Powerline-Schnittstelle mit einem Powerline-Koppler verbunden sein, der wiederum mit dem Energieversorgungsnetzwerk verbunden ist. Auf diese Weise kann die Powerline-Schnittstelle über den Powerline-Koppler Powerline-Signale in das Energieversorgungsnetzwerk senden und über den Powerline-Koppler und die Powerline-Schnittstelle Powerline-Signale aus dem Energieversorgungsnetzwerk empfangen und weiterverarbeiten. Die Netzwerk-Schnittstelle ist zum Austausch von Datenpaketen über ein Netzwerk ausgebildet. Dabei bildet das erste Headend bzw. das redundante Headend ein Gateway zwischen dem Energieversorgungsnetzwerk und dem mit der Netzwerk-Schnittstelle verbundene Netzwerk.

Bei Prüfung der Kommunikationsfähigkeit des ersten Headends kann das redundante Headend auf seine Powerline-Schnittstelle und/oder seine Netzwerk-Schnittstelle zurückgreifen, solange bei Vorliegen einer Kommunikationsfähigkeit des ersten Headends über die jeweilige Schnittstelle des redundanten Headends eine Aktivität des ersten Headends feststellbar ist. Da üblicherweise das erste Headend und das redundante Headend über ihre Netzwerk-Schnittstelle kommunizierend miteinander verbunden sein dürften und die Powerline-Schnittstelle entweder mit einem gemeinsamen Powerline-Koppler oder zumindest gemeinsam mit einer Sammelschiene verbunden sein dürften, ist diese Forderung für mindestens eine der Schnittstellen relativ einfach zu bewerkstelligen.

Prinzipiell ist es unerheblich, welche Powerline-Technologie im Zusammenhang mit der Headend-Gruppe eingesetzt wird. Vorzugsweise kommt jedoch eine Breitband-Variante von Powerline zum Einsatz, insbesondere Breitband-Powerline (BPL). Mit dieser Technologie lassen sich Übertragungsraten herstellen, die auch für die Übertragung größerer Datenmengen geeignet sind.

Die Netzwerk-Schnittstelle und das mit der Netzwerk-Schnittstelle verbundene Netzwerk können ebenso auf verschiedenste Weisen gebildet sein. Prinzipiell sind alle paketorientierten Netzwerke in diesem Zusammenhang nutzbar. Dabei können drahtgebundene Technologien ebenso verwendet werden wie funkbasierte oder optische Technologien. Aufgrund der weiten Verbreitung ist das Netzwerk jedoch vorzugsweise durch Ethernet gebildet. Dabei bildet das Netzwerk vorzugsweise ein LAN (Local Area Network). Dieses LAN kann jedoch auch eine Verbindung zu einem Backbone-Netzwerk bereitstellen. In einer Weiterbildung ist demnach die Netzwerk-Schnittstelle durch eine LAN-Schnittstelle, vorzugsweise zur Verbindung mit einem Ethernet-Netzwerk, gebildet.

Das Energieversorgungsnetzwerk, bei dem die erfindungsgemäße Headend-Gruppe eingesetzt wird, kann ebenso auf verschiedene Weise gebildet sein. Niederspannungsstrecken lassen sich ebenso verwenden wie Mittelspannungsstrecken oder Hochspannungsgleichspannungsstrecken. Vorzugsweise ist das Energieversorgungsnetzwerk jedoch durch ein Mittelspannungsnetzwerk bzw. durch einen Teilabschnitt eines Mittelspannungsnetzwerks gebildet.

In einer Ausgestaltung der Überprüfung der Kommunikationsfähigkeit des ersten Headends sendet das redundante Headend Anfragen über seine Netzwerk-Schnittstelle an das erste Headend. Antwortet das erste Headend auf eine derartige Anfrage nicht oder nicht innerhalb einer vordefinierten Zeitspanne, kann das redundante Headend für das Vorliegen eines Ausfalls der Kommunikationsfähigkeit des ersten Headends entscheiden. Voraussetzung für diese Ausgestaltung ist, dass das erste Headend und das redundante Headend über ihre jeweiligen Netzwerk-Schnittstellen kommunizierend miteinander verbunden sind. Wie bereits ausgeführt, kann diese Forderung sehr einfach erfüllt werden. Die Anfragen des redundanten Headends an das erste Headend können dabei auf verschiedenste Weisen ausgebildet sein. Vorzugsweise ist jedoch eine Anfrage durch solche Mittel gebildet, die ein handelsübliches Headend ohne Ergänzungen der Software problemlos beantworten kann. Zu einer solchen Anfrage gehört beispielsweise ein Ping, der üblicherweise von jedem mit einem Netzwerk verbundenen Gerät beantwortbar ist.

In einer Variante dieser Ausgestaltung kann das redundante Headend auch eine Anfrage über seine Netzwerk-Schnittstelle und das erste Headend zu einem Powerline-Knoten senden. Diese Anfrage würde dann bei der Netzwerk-Schnittstelle des ersten Headends empfangen und über die Powerline-Schnittstelle in die Powerline-Zelle gesendet. Auf diese Weise kann noch tiefergehend die Kommunikationsfähigkeit des ersten Headends überprüft werden. Wichtig hierbei ist, dass der angefragte Powerline-Knoten auch tatsächlich verfügbar ist. Denn eine nicht erfolgte Antwort muss nicht zwingend an einem Ausfall der Kommunikationsfähigkeit des ersten Headends liegen. Daher kann diese Variante auch mit weiteren Ausgestaltungen der Überprüfung der Kommunikationsfähigkeit oder mit zusätzlichen Tests der Erreichbarkeit des angefragten Powerline-Knotens kombiniert werden.

In einer Weiterbildung des redundanten Headends kann dieses zum Aktivieren und Deaktivieren seiner Powerline-Schnittstelle ausgebildet sein. Auf diese Weise kann der Energieverbrauch des redundanten Headends reduziert werden. Ferner wird dadurch ermöglicht, dass sich die Powerline-Schnittstellen des ersten Headends und des redundanten Headends nicht gegenseitig beeinträchtigen. Denn jedes von dem redundanten Headend in das Energieversorgungsnetzwerk gesendete Powerline-Signal beeinflusst ein kommunikationsfähiges erstes Headend und kann die durch das erste Headend erreichbare Übertragungsrate beeinträchtigen. Ein Deaktivieren der Powerline-Schnittstelle des redundanten Headends kann diese Gefahr unterbinden.

In einer Weiterbildung kann die Powerline-Schnittstelle des redundanten Headends in einen Nur-Empfangen-Modus versetzt werden. In diesem Modus sendet das redundante Headend keine Powerline-Signale in das Energieversorgungsnetzwerk, kann aber Powerline-Signalen aus dem Energieversorgungsnetzwerk empfangen und auswerten. In diesem Nur-Empfangen-Modus kann das redundante Headend damit Nachrichten überwachen, die von dem ersten Headend oder an das erste Headend gesendet werden. Da ein kommunikationsfähiges Headend stets einen Nachrichtenaustausch mit Powerline-Knoten der Powerline-Zelle aufweisen wird, kann durch Überwachen dieser Nachrichten auf die Kommunikationsfähigkeit des ersten Headends geschlossen werden. Bei Ausbleiben überwachter Nachrichten kann das redundante Headend - in dieser Ausgestaltung der Überprüfung der Kommunikationsfähigkeit des ersten Headends - für den Ausfall der Kommunikationsfähigkeit des ersten Headends entscheiden.

In einer weiteren Ausgestaltung des Überprüfens der Kommunikationsfähigkeit kann das redundante Headend Powerline-Rahmen auswerten, die mittels Powerline-Signalen von und zu dem ersten Headend gesendet werden. Auch in diesem Fall kann eine in einen Nur-Empfangen-Modus versetzte Powerline-Schnittstelle des redundanten Headends verwendet werden. In den meisten Powerline-Netzwerken sind Powerline-Rahmen vorhanden, die unverschlüsselte Informationen enthalten. Hierzu kann beispielsweise eine Netzwerkidentifikation gehören, die eine Zugehörigkeit zu einem bestimmten Netzwerk und damit eine Assoziierung zu dem ersten Headend der Headend-Gruppe erkennen lässt. Wenn derartige Powerline-Rahmen durch das redundante Headend empfangen werden, kann das redundante Headend basierend auf der mit dem ersten Headend assoziierten Netzwerkidentifikation auf ein Vorliegen der Kommunikationsfähigkeit des ersten Headends schließen. Wenn innerhalb einer vordefinierten Zeit, beispielsweise innerhalb von zwei Minuten oder innerhalb von fünf Minuten, kein derartiger Powerline-Rahmen erkannt wird, kann darauf geschlossen werden, dass kein Powerline-Gerät mit dem ersten Headend der Headend-Gruppe assoziiert ist. Dies spricht wiederum dafür, dass eine Kommunikationsfähigkeit des ersten Headends nicht vorliegt.

In einer noch weiteren Ausgestaltung des Überprüfens der Kommunikationsfähigkeit des ersten Headends kann das redundante Headend eine MME-Nachricht (Management Message Entries-Nachricht) an das erste Headend senden. Über eine derartige Nachricht kann beispielsweise eine Liste mit Powerline-Knoten erfragt werden, die mit dem ersten Headend assoziiert sind. Derartige Powerline-Knoten können vorzugsweise Powerline-Repeater sein. Antwortet das erste Headend nicht innerhalb einer vorbestimmten Zeit, beispielsweise 15 Sekunden, auf die MME-Nachricht, so kann das redundante Headend für den Ausfall der Kommunikationsfähigkeit des ersten Headends entscheiden.

Prinzipiell ist es denkbar, dass das erste Headend nur kurzfristig nicht kommunikationsfähig ist, da es, beispielsweise durch eine Aktualisierung der Software auf dem ersten Headend und/oder durch einen Neustart, für eine gewisse Zeit seine Aufgaben nicht erfüllen kann. Daher kann das redundante Headend in einer Weiterbildung bei Erkennen des Ausfalls der Kommunikationsfähigkeit des ersten Headends für eine vorbestimmte Zeit zuwarten, bevor das Verwalten der Powerline-Zelle übernommen wird. Eine derartige vordefinierte Zeitspanne wird sich an das zu erwartende Verhalten des ersten Headends orientieren. Vorzugsweise ist die vorbestimmte Zeitspanne kleiner oder gleich 5 Minuten, ganz besonders bevorzugter Weise kleiner oder gleich 1 Minute und ganz besonders bevorzugter Weise kleiner oder gleich 30 Sekunden. Nach Ablauf dieser vorbestimmten Zeitspanne kann das redundante Headend erneut die Kommunikationsfähigkeit des ersten Headends überprüfen. Wenn eine Kommunikationsfähigkeit des ersten Headends nach wie vor nicht erkennbar ist, kann das redundante Headend die Verwaltung der Zelle übernehmen. Ist die Kommunikationsfähigkeit des ersten Headends wieder hergestellt, würde das redundante Headend weiter die Kommunikationsfähigkeit des ersten Headends überwachen und keine weiteren Schritte einleiten.

Die vorgenannten Ausgestaltungen zum Überprüfen der Kommunikationsfähigkeit des ersten Headends lassen sich auch beliebig kombinieren. So kann beispielsweise das redundante Headend über seine Netzwerk-Schnittstelle eine Anfrage an das erste Headend senden. Wenn die Anfrage durch das erste Headend nicht beantwortet wird, könnte das redundante Headend seine Powerline-Schnittstelle in einen Nur-Empfangen-Modus versetzen und prüfen, ob das erste Headend keine Powerline-Signale versendet und/oder an das erste Headend adressierte Powerline-Rahmen erkennbar sind. Kann auf diesem Weg bestätigt werden, dass die Kommunikationsfähigkeit des ersten Headends nicht vorhanden ist, kann das redundante Headend für die vorbestimmte Zeitspanne, beispielsweise 30 Sekunden, abwarten, ob die Kommunikationsfähigkeit nicht lediglich vorübergehend, beispielsweise durch einen Neustart des ersten Headends, verloren gegangen ist. Kann nach Ablauf der vorbestimmten Zeitspanne weiterhin keine Aktivität des ersten Headends auf Powerline-Seite auf Netzwerk-Seite erkannt werden, so kann das redundante Headend für den Ausfall der Kommunikationsfähigkeit des ersten Headends entscheiden und die Verwaltung der Powerline-Zelle aktivieren. Zuvor mit dem ersten Headend assoziierte Powerline-Knoten würden sich danach mit dem redundanten Headend assoziieren.

Generell kann das Überprüfen der Kommunikationsfähigkeit des ersten Headends in regelmäßigen Abständen erfolgen. Vorzugsweise findet die Überprüfung dabei periodisch statt, wobei die Periodenlänge von verschiedenen Faktoren abhängen kann. So sollte gewährleistet sein, dass durch das Abfragen der Kommunikationsfähigkeit das Gesamtsystem (und insbesondere das erste Headend) nicht oder lediglich in geringem Umfang beeinträchtigt ist. Daher sind Überprüfungen der Kommunikationsfähigkeit mit Periodenlängen von wenigen Sekunden nicht sinnvoll. Vorzugsweise liegt die Periodendauer zwischen zwei aufeinanderfolgenden Prüfungen der Kommunikationsfähigkeit zwischen 1 Minute und 30 Minuten, besonders bevorzugter Weise zwischen 5 und 10 Minuten.

Wenn das redundante Headend die Verwaltung einer Powerline-Zelle übernommen hat, gibt es prinzipiell mehrere Möglichkeiten, wie nach Wiedererlangung der Kommunikationsfähigkeit des ersten Headends reagiert werden soll. So wäre denkbar, dass das redundante Headend nach Übernahme des Verwaltens der Powerline-Zelle den Status des ersten Headends übernommen hat und das ehemals erste Headend dann zum redundanten Headend herabgestuft ist. Dies setzt jedoch voraus, dass das erste Headend dieselben Funktionalitäten aufweist wie das redundante Headend, d.h. dass das erste Headend insbesondere zur Überprüfung der Kommunikationsfähigkeit eines anderen Headends der Headend-Gruppe in der Lage ist. Da bei der erfindungsgemäßen Headend-Gruppe jedoch vorzugsweise am Markt verfügbare Headends als erstes Headend eingesetzt werden, übergibt das redundante Headend vorzugsweise das Verwalten der Powerline-Zelle wieder an das erste Headend sobald die Kommunikationsfähigkeit des ersten Headends wieder vorliegt. Hierzu überwacht das redundante Headend in dieser Ausgestaltung die Kommunikationsfähigkeit des ersten Headends weiterhin, vorzugsweise periodisch, und reagiert, wenn es eine Kommunikationsfähigkeit des ersten Headends erkennt.

In diesem Fall würde das redundante Headend seine Verwaltungsfunktion deaktivieren und damit das Verwalten durch das erste Headend wieder ermöglichen.

Prinzipiell können sich verschiedenste Powerline-Knoten mit der erfindungsgemäßen Headend-Gruppe verbinden. Da sich Powerline-Knoten üblicherweise mit dem Headend assoziieren, das kommunikationstechnisch besonders günstig bezüglich des Powerline-Knotens ist, beispielsweise besonders geringe Latenzzeit, besonders gute Signalqualität und/oder gutes Antwortverhalten, sind solche Powerline-Knoten problemlos mit der erfindungsgemäßen Headend-Gruppe verbindbar. Wenn das erste Headend nicht mehr kommunikationsfähig ist und das redundante Headend die Verwaltung der Powerline-Zelle übernommen hat, assoziieren sich derartige Powerline-Knoten unmittelbar bei dem redundanten Headend. Entsprechendes gilt, wenn das redundante Headend seine Verwaltungsfunktion wieder deaktiviert und das erste Headend wieder das Verwalten der Powerline-Zelle übernehmen würde. Etwas Anderes liegt vor, wenn ein Powerline-Knoten, beispielsweise ein Repeater, fest mit einem bestimmten Headend assoziiert ist, was auch als "preferred Headend" oder "fixed cell" bezeichnet wird. Denn dann wäre der Powerline-Knoten lediglich mit dem ersten Headend der Headend-Gruppe assoziierbar, während er das redundante Headend ignorieren würde. Diese Problematik ist bei dem erfindungsgemäßen Repeater behoben.

Der erfindungsgemäße Repeater ist zum Verbinden mit einer erfindungsgemäßen Headend-Gruppe ausgebildet. Der Repeater weist eine Powerline-Schnittstelle auf und kann eine Netzwerk-Schnittstelle aufweisen. Der Repeater ist dazu konfiguriert, sich über seine Powerline-Schnittstelle bei einem primären Headend oder bei einem sekundären Headend anzumelden. Dabei kann das primäre Headend durch das erste Headend der Headend-Gruppe und das sekundäre Headend durch das redundante Headend der Headend-Gruppe gebildet sein. Bei Erreichbarkeit des primären Headends würde sich der Repeater bei dem primären Headend anmelden, bei Nichterreichbarkeit des primären Headends würde das sekundäre Headend kontaktiert und dort eine Anmeldung versucht werden. Auf diese Weise kann das erfindungsgemäße Vorsehen eines redundanten Headends in die feste Zuordnung des Repeaters zu einem Headend abgebildet werden. Denn wenn das erste Headend kommunikationsfähig ist, übernimmt dieses die Verwaltung der Powerline-Zelle und ist damit als primäres Headend für den Repeater verantwortlich. Wenn die Kommunikationsfähigkeit des ersten Headends nicht gegeben ist, sucht der Repeater ein Headend, bei dem er sich assoziieren kann. Da das erste Headend in diesem Beispiel nicht erreichbar ist, würde der Repeater das sekundäre Headend - das redundante Headend - bezüglich einer Assoziierung anfragen. Wenn das redundante Headend verfügbar ist, würde sich der Repeater bei dem redundanten Headend anmelden. Wenn das redundante Headend dazu ausgebildet ist, eine vorbestimmte Zeit nach Erkennen des Ausfalls der Kommunikationsfähigkeit des ersten Headends zu warten, bevor das Verwalten der Powerline-Zelle übernommen wird und wenn der Repeater genau in dieser vorbestimmten Zeitspanne einen Kontaktversuch unternimmt, so kann der Repeater dazu ausgebildet sein, solange wechselseitig bei dem primären und dem sekundären Headend eine Assoziierung anzufragen, bis eine Assoziierung zustande kommt. Auf diese Weise kann der Repeater auch bei einer festen Zuordnung zu einem Headend zuverlässig mit der erfindungsgemäßen Headend-Gruppe assoziiert werden.

In einer Weiterbildung kann auch der erfindungsgemäße Repeater in einer Repeater-Gruppe eingesetzt werden. Hierbei kann der Repeater als redundanter Repeater für einen ersten Repeater ausgebildet sein, wobei der redundante Repeater dann eine Kommunikationsfähigkeit des ersten Repeaters überwacht und bei Erkennen eines Ausfalls der Kommunikationsfähigkeit des ersten Repeaters die Aufgaben des ersten Repeaters übernimmt. Dies dürften insbesondere Aufbereitungs- und/oder Weiterleitungsaufgaben des ersten Repeaters sein. Für das Erkennen der Kommunikationsfähigkeit des ersten Repeaters bzw. eines Ausfalls der Kommunikationsfähigkeit können die Mechanismen, die mit Bezug auf die Headend-Gruppe beschrieben worden sind, auf den redundanten Repeater übertragen werden. Entsprechend kann der redundante Repeater eine Anfrage über seine Netzwerk-Schnittstelle an den ersten Repeater senden und/oder eine Anfrage über seine Netzwerk-Schnittstelle an einen Powerline-Knoten (vorzugsweise das primäre oder sekundäre Headend) senden und/oder über seine Powerline-Schnittstelle Nachrichten von und zu dem ersten Repeater überwachen und/oder Powerline-Rahmen in der Powerline-Zelle auswerten. Auch hier kann der redundante Repeater eine vorbestimmte Zeitspanne zuwarten, bevor er die Aufgaben des ersten Repeaters übernimmt.

Die erfindungsgemäße Headend-Gruppe kann in einem erfindungsgemäßen Powerline-System eingesetzt werden. Das erfindungsgemäße Powerline-System ist dabei für den Einsatz in einem Energieversorgungsnetzwerk, insbesondere ein Mittelspannungsnetzwerk, ausgebildet. Das Powerline-System umfasst mehrere Powerline-Teilstrecken, die jeweils auf Teilabschnitten des Energieversorgungsnetzwerks ausgebildet sind und jeweils mindestens zwei Knotenstationen innerhalb des Energieversorgungsnetzwerks mittels Powerline-Kommunikation kommunizierend miteinander verbinden. Dabei umfasst mindestens eine der Powerline-Teilstrecken eine erfindungsgemäße Headend-Gruppe sowie mindestens einen Repeater. Bei einer derartigen Powerline-Teilstrecke verwaltet das erste Headend oder das redundante Headend der Headend-Gruppe eine auf dieser Powerline-Teilstrecke gebildete Powerline-Zelle. Zudem ist der mindestens eine Repeater dieser Powerline-Teilstrecke dazu ausgebildet, ein aus dem Energieversorgungsnetzwerk empfangenes Powerline-Signal verarbeitet. Dieses "Verarbeiten" kann ein Aufbereiten und/oder ein Weiterleiten des Powerline-Signals umfassen, aber auch ein Weiterleiten der in dem Powerline-Signal enthaltenen Daten an eine Netzwerk-Schnittstelle des Repeaters. Der mindestens eine Repeater meldet sich an der Headend-Gruppe an. Mindestens einer der mindestens einen Repeater ist dabei entfernt von der Headend-Gruppe angeordnet, d.h. wenn die Headend-Gruppe in einer Knotenstation innerhalb des Energieversorgungsnetzwerks angeordnet ist, so ist dieser Repeater nicht in dieser Knotenstation, sondern in einer anderen Knotenstation angeordnet. Vorzugsweise bildet dabei dieser entfernt von der Headend-Gruppe angeordnete Repeater eine Verbindung zu einer benachbarten Powerline-Teilstrecke. Dies bedeutet, dass dieser Repeater kommunizierend mit einem Headend oder einer Headend-Gruppe einer benachbarten Powerline-Teilstrecke verbunden ist.

Die Knotenstationen können dabei durch verschiedenste Elemente innerhalb des Energieversorgungsnetzwerks gebildet sein. Als Knotenstation bieten sich insbesondere solche Stellen an, von denen aus eine gute Verteilung von Powerline-Signalen ermöglicht ist und die gleichzeitig ausreichend Platz für das Ergänzen von Komponenten des erfindungsgemäßen Powerline-Systems aufweisen. Vorzugsweise sind diese Knotenstationen durch bzw. an zentralen Stellen des Energieversorgungsnetzwerks gebildet. Dazu können gehören Transformatorstationen, Schaltanlagen, Generatoren (z.B. Windanlagen, Photovoltaikanlagen), Verbindungsstellen von Teilstrecken oder dergleichen.

Prinzipiell kann das Netzwerk und/oder die Netzwerk-Schnittstellen von Komponenten innerhalb einer der mehreren Knotenstationen derart ausgebildet sein, dass eine Kommunikation zwischen allen kommunizierend verbundenen Geräten gewährleistet ist. Hierzu kann die Netzwerkschnittstelle mehrere Buchsen aufweisen, in die jeweils Verbindungskabel zu weiteren Geräte eingesteckt werden können. Alternativ kann das Netzwerk beispielsweise Bus-artig ausgebildet sein, so dass die verschiedenen Geräte in Reihe geschaltet werden können. Da dies üblicherweise einen relativ hohen Verkabelungsaufwand bedeutet oder mit Gefahren für eine Unterbrechung des Busses verbunden ist, gehört in einer Weiterbildung des Powerline-Systems ein Switch zu dem Powerline-System, der eine Headend-Gruppe und/oder einen oder mehrere der mindestens einen Repeater in einer der mehreren Knotenstationen kommunizierend miteinander verbindet. Auf diese Weise muss jedes der betreffenden Geräte lediglich mit diesem Switch verbunden werden und es kann trotzdem eine Kommunikation mit den anderen an den Switch angeschlossenen Geräten erzielt werden. Über den Switch kann zudem eine Verbindung zu einem Backbone-Netzwerk und/oder zu weiteren Geräten hergestellt werden. Entsprechend geeignete Switche sind aus der Praxis hinlänglich bekannt.

Der Begriff "Switch" steht dabei ganz allgemein für eine Netzwerkkomponente, die mehrere mit dem Switch verbundene Geräte kommunizierend verbindet. Dabei ist es unerheblich, ob ein Layer-2-Switch oder ein Layer-3-Switch vorliegt. Auch ist unerheblich, wie der Switch empfangene Netzwerkpakete an die weiteren angeschlossenen Geräte weiterverteilt. So kann der Switch im Sinne eines einfachen Hubs ein empfangenes Datenpaket an alle weiteren Anschlüsse ausgeben. Es ist aber auch denkbar, dass der Switch Informationen über die angeschlossenen Geräte speichert und ein Datenpaket nur an den Anschluss weiterleitet, an dem das adressierte Gerät angeschlossen ist. Es ist auch unerheblich, welche Netzwerktechnologie in dem Switch realisiert ist, solange der Switch mit dem jeweiligen Netzwerk kompatibel ist. Vorzugsweise ist der Switch jedoch durch einen Ethernet-Switch gebildet.

In einer Weiterbildung ist der Switch zudem dazu ausgebildet, Netzwerkschleifen zu erkennen und aufzubrechen. Dies bedeutet, dass der Switch erkennt, wenn ein an einem Port ausgesendetes Datenpaket an einem anderen Port wieder empfangen wird. Durch Erkennen und Aufbrechen derartiger Netzwerkschleifen (auch als Loop bezeichnet) kann eine unnötige Belastung des Netzwerks verhindert werden. Das Erkennen und Aufbrechen der Netzwerkschleifen kann auf verschiedenste Weise erfolgen. Vorzugsweise wird hierzu jedoch STP (Spanning Tree Protocol) oder RSTP (Rapid Spanning Tree Protocol) eingesetzt.

Innerhalb des Energieversorgungsnetzwerks können verschiedene Knotenstationen ausgebildet sein. So kann eine Knotenstation eine Mittenstation bilden, in der zwei (oder auch mehr) Powerline-Teilstrecken miteinander kommunizierend verbunden sind. Dies bedeutet üblicherweise, dass in dieser Mittenstation eine Headend-Gruppe einer Powerline-Teilstrecke und einer oder mehrere Repeater einer anderen Powerline-Teilstrecke angeordnet sind und über deren jeweilige Netzwerk-Schnittstelle kommunizierend miteinander verbunden sind. Diese kommunizierende Verbindung kann durch einen Switch erreicht werden, wobei der Switch dann für die verbundenen Powerline-Teilstrecken gemeinsam genutzt würde.

Innerhalb des Energieversorgungsnetzwerks können Knotenstationen auch Uplink-Stationen bilden. In diesen Uplink-Stationen sind Komponenten mindestens einer Powerline-Teilstrecke angeordnet, wobei dieser mindestens eine Powerline-Teilstrecke kommunizierend mit einem weiteren Netzwerk verbunden wird. Dieses weitere Netzwerk kann durch ein Backbone-Netzwerk gebildet sein. Der Begriff "Backbone-Netzwerk" ist dabei allgemein zu verstehen und bezeichnet allgemein ein Netzwerk, das einen Zugriff auf entfernte Server und Netzwerkknoten bereitstellt. Dabei wird üblicherweise auch eine relativ hohe Datenrate zur Verfügung gestellt. Die Verbindung zwischen der Powerline-Teilstrecke (und damit dem Headend der zugehörigen Headend-Gruppe) und dem weiteren Netzwerk kann dabei wiederum über einen Switch hergestellt werden.

Innerhalb des Energieversorgungsnetzwerks können auch Randstationen ausgebildet sein. In diesen Knotenstationen würde eine Powerline-Teilstrecke enden, ohne dass eine Verbindung zu einem weiteren Netzwerk oder einer weiteren Powerline-Teilstrecke hergestellt wird. In einer derartigen Randstation dürfte dann ein Repeater der Powerline-Teilstrecke angeordnet sein, die in dieser Randstation endet.

Für das erfindungsgemäße Powerline-System ist es nicht entscheidend, wie die einzelnen Powerline-Teilstrecken (geografisch) verlaufen und wie diese untereinander verbunden sind. So kann durch die Powerline-Teilstrecken ein vermaschtes Netz entstehen, das sich über ein geografisches Gebiet erstreckt. In diesem Fall können mehrere Powerline-Teilstrecken in einer Mittenstation verbunden sein. In einer bevorzugten Ausgestaltung bauen die mehreren Powerline-Teilstrecken jedoch jeweils eine Punkt-zu-Punkt-Verbindung zwischen zwei Knotenstationen, sodass die mehreren Powerline-Teilstrecken eine Kette und/oder einen (offenen oder geschlossenen) Ring von Punkt-zu-Punkt-Verbindungen bilden. Dabei ist es auch denkbar, dass sich diese Kette an einer oder mehreren Stellen aufspaltet, d.h. in einem Teilbereich der Kette verlaufen Powerline-Teilstrecken parallel. In diesen parallelen Powerline-Teilstrecken ist es möglich, dass auf erfindungsgemäße Headend-Gruppen verzichtet wird, da durch die parallel verlaufenden Powerline-Teilstrecken bereits eine Redundanz gebildet ist.

Prinzipiell muss ein Ausfall der Kommunikationsfähigkeit des ersten Headends nicht unbedingt durch einen Ausfall des ersten Headends verursacht werden. Es wäre auch denkbar, dass die Kommunikation des ersten Headends durch Störungen auf dem Energieversorgungsnetzwerk derart stark beeinträchtigt ist, dass dies einem Ausfall der Kommunikationsfähigkeit gleichkommt. In einem derartigen Szenarium kann das redundante Headend dazu ausgebildet sein, in einem Kommunikationsmodus betrieben zu werden, der besonders robust gegenüber Störungen auf dem Energieversorgungsnetzwerk ist. Während dann das erste Headend infolge der Störungen praktisch kommunikationsunfähig ist, kann das redundante Headend immer noch eine Kommunikation bereitstellen. Meist wird diese erhöhte Robustheit jedoch durch eine deutlich reduzierte Datenrate erkauft. Dennoch ist eine Kommunikation mit geringer Datenraten häufig sinnvoller als keine Kommunikationsfähigkeit.

Generell kann das erfindungsgemäße Powerline-System eine oder mehrere Headend-Gruppen aufweisen. Gleichzeitig ist es möglich, dass das erfindungsgemäße Powerline-System einen oder mehrere erfindungsgemäße Repeater aufweist. Letzteres bedeutet, dass der Repeater fest zu einem primäres oder einem sekundäres Headend gebunden ist und/oder dass der Repeater Teil einer Repeater-Gruppe mit erstem und redundantem Repeater ist.

Es gibt nun verschiedene Möglichkeiten, die Lehre der vorliegenden Erfindung in vorteilhafter Weise auszugestalten und weiterzubilden. Dazu ist einerseits auf die den nebengeordneten Ansprüchen nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: ein System gemäß Stand der Technik zur Veranschaulichung der Problematik ausfallender Powerline-Knoten und
- Fig. 2: ein Ausführungsbeispiel eines erfindungsgemäßen Powerline-Systems mit erfindungsgemäßen Headend-Gruppen und erfindungsgemäßen Repeatern.

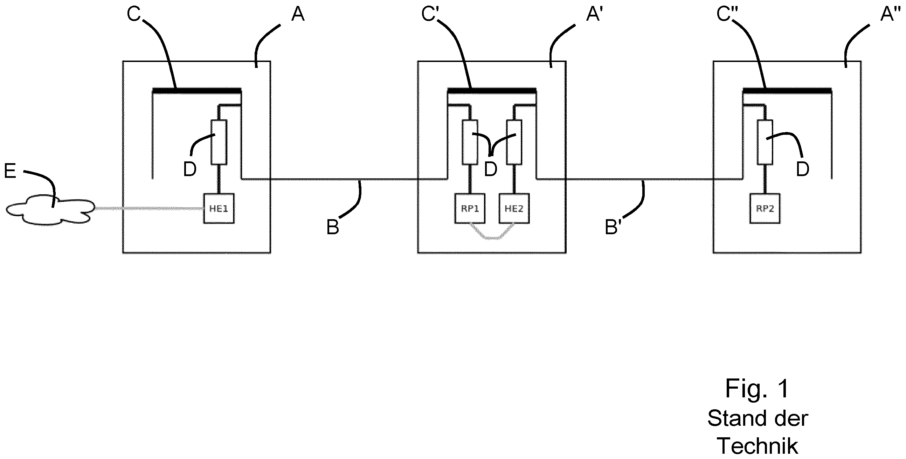

Fig. 1 zeigt ein System, das aus dem Stand der Technik bekannt ist und eine Kette mehrerer hintereinander geschalteter Punkt-zu-Punkt-Verbindungen mit Powerline zeigt. In Fig. 1 sind drei Knotenstationen A, A', A" dargestellt, die jeweils mit einer Mittelspannungsstrecke B, B' verbunden sind. Dadurch entstehen zwei Powerline-Teilstrecken, nämlich eine erste Powerline-Teilstrecke zwischen den Knotenstationen A und A' und eine zweite Powerline-Teilstrecke zwischen den Knotenstationen A' und A". Dabei sind die beiden Powerline-Teilstrecken in der zweiten Kotenstation A' über ein LAN (Local Area Network) miteinander verbunden. Dies bedeutet, dass Knotenstation A eine Uplink-Station, Knotenstation A' eine Mittenstation und Knotenstation A" eine Randstation ist. Jede Knotenstation A, A', A" umfasst für jede Phase des Energieversorgungsnetzwerks eine Sammelschiene C, C', C", die an dem Knotenpunkt angeordnete Betriebsmittel, Verbraucher und/oder Erzeuger getrennt nach Phasen miteinander verbinden und von denen in Fig. 1 lediglich eine dargestellt ist.

In der ersten Knotenstation A ist ein erstes Headend HE1 angeordnet, das mittels eines Powerline-Kopplers D mit der Sammelschiene C bzw. einer Zuleitung zu der Sammelschiene C verbunden ist. Auf diese Weise kann das erste Headend HE1 Powerline-Signale aus der Mittelspannungsstrecke B empfangen bzw. in dieses senden. Zusätzlich zu der Powerline-seitigen Verbindung zu der Sammelschiene C ist das erste Headend HE1 mit einem Backbone-Netzwerk E über ein LAN verbunden.

In der zweiten Knotenstation A' ist ein erster Repeater RP1 und ein zweites Headend HE2 angeordnet, die Powerline-seitig jeweils über einen Powerline-Koppler D mit der Sammelschiene C' bzw. mit einer Zuleitung zu der Sammelschiene C' verbunden sind. Zusätzlich zu diesen Powerline-seitigen Verbindungen zu der Sammelschiene C' sind der erste Repeater RP1 und das zweite Headend HE2 über LAN verbunden. Dabei ist der erste Repeater RP1 an das erste Headend HE1 gebunden und ist daher Teil der von dem ersten Headend HE1 aufgespannten Powerline-Zelle.

In der dritten Knotenstation A" ist ein zweiter Repeater RP2 angeordnet, der wiederum Powerline-seitig mittels eines Powerline-Kopplers D mit der Sammelschiene C" bzw. mit einer Zuleitung zu der Sammelschiene C" verbunden ist. Dabei ist der zweite Repeater RP2 bei dem zweiten Headend HE2 angemeldet und damit Teil der durch das zweite Headend HE2 aufgespannten Powerline-Zelle. Auf diese Weise kann der zweite Repeater RP2 über die Mittelspannungsstrecke B', Headend HE2, Repeater RP1, Mittelspannungsstrecke B und Headend HE1 mit dem Backbone-Netzwerk kommunizieren. Es ist ersichtlich, dass bei Ausfall eines der Headends oder einer der Repeater diese Kommunikationsmöglichkeit ausfällt.

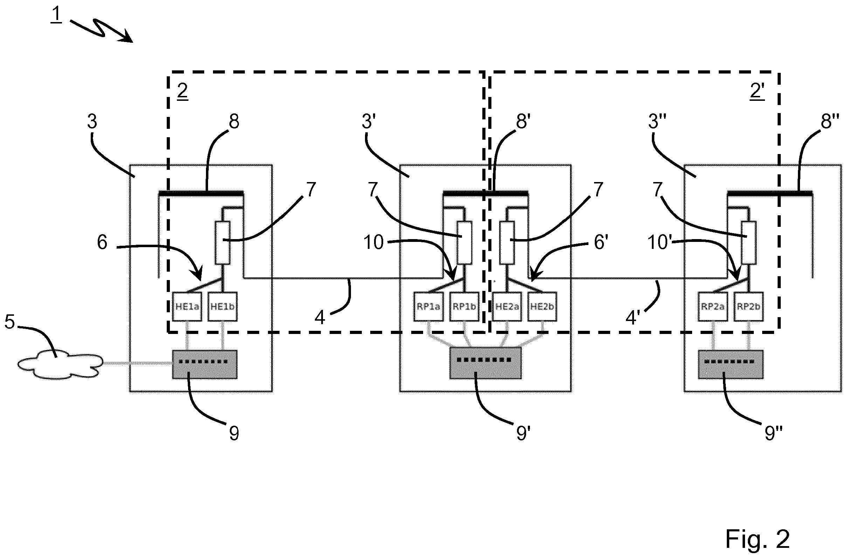

Bei dem Ausführungsbeispiel des erfindungsgemäßen Powerline-Systems, das in Fig. 2 dargestellt ist, ist eine zusätzliche Redundanz geschaffen, um derartige Unterbrechungen zu vermeiden. Das in Fig. 2 dargestellte Powerline-System 1 umfasst zwei Powerline-Teilstrecken: Powerline-Teilstrecke 2 und Powerline-Teilstrecke 2'. Die Powerline-Teilstrecken 2 verbindet eine Knotenstation 3 mit einer Knotenstation 3', Powerline-Teilstrecke 2' verbindet die Knotenstation 3' mit einer Knotenstation 3", wobei die Powerline-Teilstrecke 2 eine Mittelspannungsstrecke 4 und die Powerline-Teilstrecke 2' eine Mittelspannungsstrecke 4' nutzt. Knotenstation 3 ist eine UplinkStation, da eine Verbindung zu einem Backbone-Netzwerk 5 hergestellt wird. Die Knotenstation 3' ist eine Mittenstation und verbindet die Powerline-Teilstrecken 2 und 2'. Die Knotenstation 3" ist eine Randstation, da dort die Powerline-Teilstrecke 2' endet und keine Verbindung zu einer weiteren Powerline-Teilstrecke oder zu einem weiteren Netzwerk hergestellt ist.

Die ersten Powerline-Teilstrecke 2 umfasst eine Headend-Gruppe 6, die aus einem ersten Headend HE1a und einem redundanten Headend HE1b besteht. Das erste Headend HE1a und das redundanten Headend HE1b weisen jeweils eine Powerline-Schnittstelle (in Fig. 2 nach oben gerichtete Verbindungen) und eine Netzwerkschnittstelle (in Fig. 2 nach unten gerichtete Verbindungen) auf. Die Powerline-Schnittstellen der beiden Headends sind gemeinsam mit einem Powerline-Koppler 7 verbunden, der wiederum mit einer Sammelschiene 8 in der Knotenstation 3 verbunden ist. Die Netzwerk-Schnittstellen der beiden Headends sind mit einem Switch 9 verbunden, der auch eine Verbindung zu dem Backbone-Netzwerk 5 herstellt. Die Headend-Gruppe 6, Powerline-Koppler 7 und Switch 9 sind jeweils in der Knotenstation 3 angeordnet.

Die erste Powerline-Teilstrecke 2 umfasst ferner eine Repeater-Gruppe 10, die einen ersten Repeater RP1a und einen redundanten Repeater RP1b umfasst. Der erste Repeater RP1a und der redundante Repeater RP1b weisen jeweils eine Powerline-Schnittstelle (in Fig. 2 nach oben gerichtete Verbindungen) und eine Netzwerk-Schnittstelle (in Fig. 2 nach unten gerichtete Verbindungen) auf. Die Powerline-Schnittstellen der beiden Repeater RP1a, RP1b sind gemeinsam mit einem Powerline-Koppler 7 verbunden, der wiederum mit einer Sammelschiene 8' verbunden ist. Die Netzwerkschnittstellen der beiden Repeater RP1a, RP1b sind mit einem Switch 9' verbunden. In dem Repeater RP1a und in dem Repeater RP1b ist jeweils das erste Headend HE1a als primäres Headend und das redundante Headend HE1b als sekundäres Headend hinterlegt. Dadurch meldet sich der jeweilige Repeater RP1a, RP1b bei dem ersten Headend HE1a an, sofern dieses verfügbar ist. Wenn das erste Headend HE1a nicht erreichbar ist, meldet sich der jeweilige Repeater RP1a, RP1b bei dem redundanten Headend HE1b an.

Die zweite Powerline-Teilstrecke 2' ist weitgehend identisch zu der ersten Powerline-Teilstrecke 2 aufgebaut und umfasst eine Headend-Gruppe 6' und eine Repeater-Gruppe 10'. Die Headend-Gruppe 6', umfassend ein erstes Headend HE2a und ein redundantes Headend HE2b, ist Powerline-seitig mit einem Powerline-Koppler 7 und netzwerkseitig mit dem Switch 9' verbunden. Die Repeater-Gruppe 10, die Headend-Gruppe 6' und der Switch 9' sind dabei in der Knotenstation 3' angeordnet. Die Repeater-Gruppe 10', umfassend einen ersten Repeater RP2a und einen redundanten Repeater RP2b, ist Powerline-seitig mit einem Powerline-Koppler 7 und netzwerkseitig mit einem Switch 9" verbunden. Die Repeater-Gruppe 10' und Switch 9" sind in der Knotenstation 3" angeordnet.

Bezüglich der Funktionsweise der ersten Headends HE1a, HE2a, der redundanten Headends HE1b, HE2b, der ersten Repeater RP1a, RP2a, der redundanten Repeater RP1b, RP2b und der Switche 9, 9', 9" sei zur Vermeidung von Wiederholungen auf den allgemeinen Teil der Beschreibung verwiesen.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel lediglich zur Erörterung der beanspruchten Lehre dienen, diese jedoch nicht auf das Ausführungsbeispiel einschränken.

### Bezugszeichenliste

- A, A', A": Knotenstation
- B, B': Mittelspannungsstrecke
- C, C', C": Sammelschiene
- D: Powerline-Koppler
- E: Backbone-Netzwerk
- HE1a, HE2a: Erstes Headend
- HE2b, HE2b: Redundantes Headend
- RP1a, RP1a: Erster Repeater
- RP1b, RP2b: Redundanter Repeater
- 1: Powerline-System
- 2, 2': Powerline-Teilstrecke
- 3, 3', 3": Knotenstation
- 4, 4': Mittelspannungsstrecke
- 5: Backbone-Netzwerk
- 6, 6': Headend-Gruppe
- 7: Powerline-Koppler
- 8, 8', 8": Sammelschiene
- 9, 9', 9": Switch
- 10, 10': Repeater-Gruppe

## Patentansprüche

1. Headend-Gruppe mit einem ersten Headend (HE1a, HE2a) und einem redundanten Headend (HE1b, HE2b), wobei das erste Headend (HE1a, HE2a) und das redundante Headend (HE1b, HE2b) jeweils eine Powerline-Schnittstelle und eine Netzwerk-Schnittstelle aufweisen, wobei die Powerline-Schnittstellen zum Austausch von Powerline-Signalen über ein Energieversorgungsnetzwerk ausgebildet sind, wobei die Netzwerk-Schnittstellen zum Austausch von Datenpaketen über ein Netzwerk ausgebildet sind, wobei das erste Headend (HE1a, HE2a) zum Verwalten einer in dem Energieversorgungsnetzwerk gebildeten Powerline-Zelle ausgebildet ist, wobei das redundante Headend (HE1b, HE2b) dazu ausgebildet ist, unter Nutzung seiner Powerline-Schnittstelle und/oder seiner Netzwerk-Schnittstelle und durch Überprüfen einer Kommunikationsfähigkeit des ersten Headends (HE1a, HE2a) einen Ausfall der Kommunikationsfähigkeit des ersten Headends (HE1a, HE2a) zu erkennen und bei Erkennen des Ausfalls der Kommunikationsfähigkeit ein Verwalten der Powerline-Zelle zu übernehmen.

2. Headend-Gruppe nach Anspruch 1, **dadurch gekennzeichnet, dass** das erste Headend (HE1a, HE2a) und das redundante Headend (HE1b, HE2b) über ihre Netzwerk-Schnittstellen kommunizierend miteinander verbunden sind und dass das redundante Headend (HE1b, HE2b) dazu ausgebildet ist, über die NetzwerkSchnittstelle Anfragen an das erste Headend (HEla, HE2a) und/oder an einen über das erste Headend (HEla, HE2a) erreichbaren Powerline-Knoten zu senden und bei Ausbleiben einer Antwort für das Vorliegen eines Ausfalls der Kommunikationsfähigkeit des ersten Headends (HE1a, HE2a) zu entscheiden.

3. Headend-Gruppe nach Anspruch 1 oder 2, **dadurch gekennzeichnet, dass** das redundante Headend (HE1b, HE2b) zum Aktivieren und Deaktivieren der Powerline-Schnittstelle ausgebildet ist und/oder dass das redundante Headend (HE1b, HE2b) dazu ausgebildet ist, seine Powerline-Schnittstelle in einen Nur-Empfangen-Modus zu versetzen, wobei das redundante Headend (HE1b, HE2b) in dem Nur-Empfangen-Modus dazu ausgebildet ist, Nachrichten zu überwachen, die von dem ersten Headend (HE1a, HE2a) oder an das ersten Headend (HE1a, HE2a) gesendet werden, und bei Ausbleiben überwachter Nachrichten für den Ausfall der Kommunikationsfähigkeit des ersten Headends (HE1a, HE2a) zu entscheiden.

4. Headend-Gruppe nach einem der Ansprüche 1 bis 3, **dadurch gekennzeichnet, dass** das redundante Headend (HE1b, HE2b) dazu ausgebildet ist, eine Netzwerk-Identifikation von Powerline-Rahmen, die mittels Powerline-Signalen von und zu dem ersten Headend (HE1a, HE2a) gesendet werden, auszuwerten und basierend auf der mit dem ersten Headend (HE1a, HE2a) assoziierten Netzwerk-Identifikation auf ein Vorliegen oder einen Ausfall der Kommunikationsfähigkeit des ersten Headends (HE1a, HE2a) zu schließen.

5. Headend-Gruppe nach einem der Ansprüche 1 bis 4, **dadurch gekennzeichnet, dass** das redundante Headend (HE1b, HE2b) dazu ausgebildet ist, eine MME-Nachricht - Management Message Entries Nachricht - an das erste Headend (HE1a, HE2a) zu senden, mit der vorzugsweise mit dem ersten Headend (HE1a, HE2a) assoziierte Powerline-Knoten, insbesondere Powerline-Repeater, erfragt werden, und bei Ausbleiben einer Antwort auf die MME-Nachricht für den Ausfall der Kommunikationsfähigkeit des ersten Headends (HE1a, HE2a) zu schließen.

6. Headend-Gruppe nach einem der Ansprüche 1 bis 5, **dadurch gekennzeichnet, dass** das redundante Headend (HE1b, HE2b) bei Erkennen des Ausfalls der Kommunikationsfähigkeit des ersten Headends (HE1a, HE2a) für eine vorbestimmte Zeitspanne wartet, bevor das Verwalten der Powerline-Zelle übernommen wird, und dass das redundante Headend (HE1b, HE2b) nach Ablauf der vorbestimmten Zeitspanne erneut die Kommunikationsfähigkeit des ersten Headends (HE1a, HE2a) überprüft.

7. Headend-Gruppe nach einem der Ansprüche 1 bis 6, **dadurch gekennzeichnet, dass** der redundante Headend (HE1b, HE2b) nach Übernehmen des Verwaltens der Powerline-Zelle die Kommunikationsfähigkeit des ersten Headends (HE1a, HE2a) vorzugsweise periodisch überwacht und bei Erkennen eines Vorliegens der Kommunikationsfähigkeit des ersten Headends (HE1a, HE2a) das Verwalten der Powerline-Zelle beendet.

8. Repeater zum Verbinden mit einer Headend-Gruppe nach einem der Ansprüche 1 bis 7, wobei der Repeater (RP1a, RP1b, RP2a, RP2b) eine Powerline-Schnittstelle aufweist, wobei der Repeater (RP1a, RP1b, RP2a, RP2b) dazu konfiguriert ist, sich über seine Powerline-Schnittstelle bei einem primären Headend oder bei einem sekundärer Headend anzumelden, wobei das primäre Headend vorzugsweise durch das erste Headend (HE1a, HE2a) der Headend-Gruppe (6, 6') und das sekundäre Headend vorzugsweise durch das redundante Headend (HE1b, HE2b) der Headend-Gruppe (6, 6') gebildet ist, wobei sich der Repeater (RP1a, RP1b, RP2a, RP2b) bei Erreichbarkeit des primären Headends bei dem primären Headend und bei Nicht-Erreichbarkeit des primären Headends bei dem sekundären Headend anmeldet.

9. Repeater nach Anspruch 8, **dadurch gekennzeichnet, dass** der Repeater als redundanter Repeater (RP1b, RP2b) für einen ersten Repeater (RP1a, RP2a) ausgebildet ist, wobei der redundante Repeater (RP1b, RP2b) eine Kommunikationsfähigkeit des ersten Repeaters (RP1a, RP2a) überwacht und bei Erkennen eines Ausfalls der Kommunikationsfähigkeit des ersten Repeaters (RP1a, RP2a) Verarbeitungsaufgaben des ersten Repeaters (RP1a, RP2a), insbesondere Aufbereitungs- und/oder Weiterleitungsaufgaben, übernimmt.

10. Powerline-System für ein Energieversorgungsnetzwerk, insbesondere ein Mittelspannungsnetzwerk, umfassend mehrere Powerline-Teilstrecken (2, 2'), die jeweils auf Teilabschnitten des Energieversorgungsnetzwerks ausgebildet sind und jeweils mindestens zwei Knotenstationen (3, 3', 3") innerhalb des Energieversorgungsnetzwerks durch Powerline-Kommunikation kommunizierend miteinander verbindet, wobei mindestens eine der Powerline-Teilstrecken (2, 2') umfasst:
eine Headend-Gruppe (6, 6') nach einem der Ansprüche 1 bis 7, wobei das erste Headend (HEla, HE2a) oder das redundante Headend (HE1b, HE2b) der Headend-Gruppe (6, 6') eine auf der Powerline-Teilstrecke (2, 2') gebildete Powerline-Zelle verwaltet, und
mindestens einen Repeater (RP1a, RP2a, RP1b, RP2b), der entfernt von der Headend-Gruppe (6, 6') angeordnet ist und ein aus dem Energieversorgungsnetzwerk empfangenes Powerline-Signal verarbeitet, wobei sich der mindestens eine Repeater (RP1a, RP2a, RP1b, RP2b) an der Headend-Gruppe (6, 6') anmeldet und wobei einer oder mehrere der mindestens einen Repeater vorzugsweise nach Anspruch 8 oder 9 ausgebildet ist/sind.

11. Powerline-System nach Anspruch 10, **dadurch gekennzeichnet, dass** eine Headend-Gruppe (6, 6') und/oder ein oder mehrere der mindestens einen Repeater (RP1a, RP1b, RP2a, RP2b) in einer der mehreren Knotenstation (3, 3', 3") angeordnet sind, wobei die Powerline-Schnittstellen dieser Einheiten mit dem Energieversorgungsnetzwerk und die Netzwerk-Schnittstelle mittels eines Switches (9, 9', 9") kommunizierend miteinander verbunden sind, wobei der Switch (9, 9', 9") vorzugsweise dazu ausgebildet ist, Netzwerkschleifen zu erkennen und aufzubrechen, vorzugsweise unter Verwendung von STP - Spanning Tree Protocol - oder RSTP - Rapid Spanning Tree Protocol.

12. Powerline-System nach Anspruch 10 oder 11, **dadurch gekennzeichnet, dass** zwei benachbarte Powerline-Teilstrecken (2, 2') in einer Knotenstation - Mittenstation (3') - verbunden sind, wobei in der Mittenstation (3') die Headend-Gruppe (6') einer der beiden benachbarten Powerline-Teilstrecken (2') und einer oder mehrere der mindestens einen Repeater (RP1a, RP1b) der anderen der beiden benachbarten Powerline-Teilstrecken (2) angeordnet und über deren NetzwerkSchnittstelle kommunizierend verbunden sind.

13. Powerline-System nach einem der Ansprüche 10 bis 12, **dadurch gekennzeichnet, dass** in einer der Knotenstationen - Uplinkstation (3) - eine Verbindung zu einem weiteren Netzwerk, vorzugsweise einem Backbone-Netzwerk (5), herstellbar ist.

14. Powerline-System nach einem der Ansprüche 10 bis 13, **dadurch gekennzeichnet, dass** die mehreren Powerline-Teilstrecken (2, 2') jeweils Punkt-zu-Punkt-Verbindungen zwischen zwei Knotenstationen (3, 3', 3") aufbauen und die mehreren Powerline-Teilstrecken (2, 2') eine Kette und/oder einen Ring von Punkt-zu-Punkt-Verbindungen bilden.

15. Powerline-System nach einem der Ansprüche 10 bis 14, **dadurch gekennzeichnet, dass** das redundante Headend (HE1b, HE2b) dazu ausgebildet ist, die Powerline-Kommunikation einen Modus zu schalten, in dem eine Kommunikation unempfindlicher gegenüber Störungen auf dem Energieversorgungsnetzwerk ist.

## Claims

1. Head end group comprising a first head end (HEla, HE2a) and a redundant head end (HElb, HE2b), wherein the first head end (HEla, HE2a) and the redundant head end (HElb, HE2b) each have a Powerline interface and a network interface, wherein the Powerline interfaces are designed for the exchange of Powerline signals via a power supply network, wherein the network interfaces are designed for exchanging data packets over a network, wherein the first head end (HEla, HE2a) is designed for managing a Powerline cell formed in the power supply network, wherein the redundant head end (HElb, HE2b) is designed, using its Powerline interface and/or its network interface and by examining the communication capability of the first head end (HEla, HE2a), to detect a failure of the communication capability of the first head end (HEla, HE2a) and to assume management of the Powerline cell if failure of the communication capability is detected.

2. Head end group according to Claim 1, **characterized in that** the first head end (HEla, HE2a) and the redundant head end (HElb, HE2b) are interconnected via their network interfaces, and that the redundant head end (HElb, HE2b) is designed to send requests via the network interface to the first head end (HEla, HE2a) and/or to a Powerline node reachable via the first head end (HEla, HE2a) and, in the absence of a response, to decide that the communication capability of the first head end (HEla, HE2a) has failed.

3. Head end group according to Claim 1 or 2, **characterized in that** the redundant head end (HElb, HE2b) is designed to enable and disable the Powerline interface and/or that the redundant head end (HElb, HE2b) is designed to place its Powerline interface in a receive-only mode, wherein the redundant head end (HElb, HE2b) in the receive-only mode is designed to monitor messages sent from the first head end (HEla, HE2a) or to the first head end (HEla, HE2a), and in the absence of monitored messages, to decide that the communication capability of the first head end (HEla, HE2a) has failed.

4. Head end group according to any one of Claims 1 to 3, **characterized in that** the redundant head end (HElb, HE2b) is designed to evaluate a network identification of Powerline frames that are sent by means of Powerline signals from and to the first head end (HEla, HE2a), and based on the network identification associated with the first head end (HEla, HE2a) to conclude that the communication capability of the first head end (HEla, HE2a) is intact or has failed.

5. Head end group according to any one of Claims 1 to 4, **characterized in that** the redundant head end (HElb, HE2b) is designed to send an MME message - Management Message Entries message - to the first head end (HEla, HE2a), by means of which Powerline nodes, in particular Powerline repeaters, associated with the first head end (HEla, HE2a) are queried, and if there is no response to the MME message to conclude that the communication capability of the first head end (HEla, HE2a) has failed.

6. Head end group according to any one of Claims 1 to 5, **characterized in that** if the failure of the communication capability of the first head end (HEla, HE2a) is detected the redundant head end (HElb, HE2b) waits for a predetermined period of time before assuming the management of the Powerline cell, and that the redundant head end (HElb, HE2b) checks the communication capability of the first head end (HEla, HE2a) again after the predetermined period of time has elapsed.

7. Head end group according to any one of Claims 1 to 6, **characterized in that** the redundant head end (HElb, HE2b), after assuming the management of the Powerline cell, preferably periodically monitors the communication capability of the first head end (HEla, HE2a) and terminates the management of the Powerline cell upon detection of the presence of the communication capability of the first head end (HEla, HE2a).

8. Repeater for connecting to a head end group according to any one of Claims 1 to 7, wherein the repeater (RPla, RPlb, RP2a, RP2b) has a Powerline interface, wherein the repeater (RPla, RPlb, RP2a, RP2b) is configured to log on to a primary head end or to a secondary head end via its Powerline interface, wherein the primary head end is preferably formed by the first head end (HEla, HE2a) of the head end group (6, 6') and the secondary head end is preferably formed by the redundant head end (HElb, HE2b) of the head end group (6, 6'), wherein the repeater (RPla, RPlb, RP2a, RP2b) logs on to the primary head end if the primary head end is reachable and logs on to the secondary head end if the primary head end is not reachable.

9. Repeater according to Claim 8, **characterized in that** the repeater is designed as a redundant repeater (RP1b, RP2b) for a first repeater (RPla, RP2a), wherein the redundant repeater (RP1b, RP2b) monitors a communication capability of the first repeater (RPla, RP2a) and, upon detecting a failure of the communication capability of the first repeater (RPla, RP2a), assumes processing tasks of the first repeater (RPla, RP2a), in particular, preparation and/or forwarding tasks.

10. Powerline system for a power supply network, in particular a medium-voltage network, comprising a plurality of Powerline sections (2, 2'), each of which is formed on sub-sections of the power supply network and each of which communicatively connects at least two node stations (3, 3', 3") within the power supply network by means of Powerline communication, wherein at least one of the Powerline sections (2, 2') comprises:
a head end group (6, 6') according to any one of Claims 1 to 7, wherein the first head end (HEla, HE2a) or the redundant head end (HElb, HE2b) of the head end group (6, 6') manages a Powerline cell formed on the Powerline section (2, 2'), and
at least one repeater (RPla, RP2a, RPlb, RP2b), which is arranged remotely from the head end group (6, 6') and processes a Powerline signal received from the power supply network, wherein the at least one repeater (RPla, RP2a, RPlb, RP2b) logs on to the head end group (6, 6') and wherein one or more of the at least one repeaters is preferably designed according to Claim 8 or 9.

11. Powerline system according to Claim 10, **characterized in that** a head end group (6, 6') and/or one or more of the at least one repeaters (RPla, RPlb, RP2a, RP2b) are arranged in one of the plurality of node stations (3, 3', 3"), wherein the Powerline interfaces of these units with the power supply network and the network interface are communicatively connected to each other by means of a switch (9, 9', 9"), wherein the switch (9, 9', 9") is preferably designed to detect and break up network loops, preferably using STP - Spanning Tree Protocol - or RSTP - Rapid Spanning Tree Protocol.

12. Powerline system according to Claim 10 or 11, **characterized in that** two adjacent Powerline sections (2, 2') are connected in a node station - centre station (3'), wherein the head end group (6') of one of the two adjacent Powerline sections (2') and one or more of the at least one repeaters (RPla, RP1b) of the other of the two adjacent Powerline sections (2) are arranged in the centre station (3') and are communicatively connected via their network interface.

13. Powerline system according to any one of Claims 10 to 12, **characterized in that** in one of the node stations - uplink station (3) - a connection to a further network, preferably a backbone network (5), can be established.

14. Powerline system according to any one of Claims 10 to 13, **characterized in that** the plurality of Powerline sections (2, 2') each establish point-to-point connections between two node stations (3, 3', 3") and the plurality of Powerline sections (2, 2') form a chain and/or a ring of point-to-point connections.

15. Powerline system according to any one of Claims 10 to 14, **characterized in that** the redundant head end (HElb, HE2b) is designed to switch the Powerline communication to a mode in which communication is less sensitive to interference on the power supply network.

## Revendications

1. Groupe de tête de réseau comportant une première tête de réseau (HEla, HE2a) et une tête de réseau redondante (HElb, HE2b), dans lequel la première tête de réseau (HEla, HE2a) et la tête de réseau redondante (HElb, HE2b) présentent chacune une interface de ligne électrique et une interface réseau, dans lequel les interfaces de ligne électrique sont configurées pour échanger des signaux de ligne électrique via un réseau d'alimentation, dans lequel les interfaces réseau sont configurées pour échanger des paquets de données via un réseau, dans lequel la première tête de réseau (HEla, HE2a) est configurée pour la gestion d'une cellule de ligne électrique formée dans le réseau d'alimentation électrique, dans lequel la tête de réseau redondante (HElb, HE2b) est configurée pour détecter une défaillance de la capacité de communication de la première tête de réseau (HEla, HE2a) en utilisant son interface de ligne électrique et/ou son interface réseau et en vérifiant une capacité de communication de la première tête de réseau (HEla, HE2a) et sur détection de la panne de la capacité de communication pour prendre en charge la gestion de la cellule de ligne électrique.

2. Groupe de tête de réseau selon la revendication 1, **caractérisé en ce que** la première tête de réseau (HEla, HE2a) et la tête de réseau redondante (HElb, HE2b) sont reliées entre elles de manière communicante via leurs interfaces réseau et que la tête de réseau redondante (HElb, HE2b) est configurée pour envoyer des requêtes via l'interface réseau à la première tête de réseau (HEla, HE2a) et/ou à un noeud de ligne électrique accessible via la première tête de réseau (HEla, HE2a) et décider en l'absence de réponse de l'existence d'une défaillance de la capacité de communication de la première tête de réseau (HEla, HE2a) .

3. Groupe de tête de réseau selon la revendication 1 ou 2, **caractérisé en ce que** la tête de réseau redondante (HElb, HE2b) est configurée pour activer et désactiver l'interface de ligne électrique et/ou que la tête de réseau redondante (HElb, HE2b) est configurée pour placer son interface de ligne électrique dans un mode de réception uniquement, dans lequel la tête de réseau redondante (HElb, HE2b) est configurée dans le mode de réception uniquement pour surveiller les messages provenant de la première tête de réseau (HEla, HE2a) ou envoyés vers la première tête de réseau (HEla, HE2a), et décider en l'absence de messages surveillés de la défaillance de la capacité de communication de la première tête de réseau (HEla, HE2a).

4. Groupe de tête de réseau selon une des revendications 1 à 3, **caractérisé en ce que** la tête de réseau redondante (HElb, HE2b) est configurée pour évaluer une identification réseau des trames de ligne électrique qui sont transmises au moyen de signaux de ligne électrique depuis et vers la première tête de réseau (HEla, HE2a) et sur la base de l'identification du réseau associé à la première tête de réseau (HEla, HE2a) décider de la présence ou la défaillance de la capacité de communication de la première tête de réseau (HEla, HE2a).

5. Groupe de tête de réseau selon une des revendications 1 à 4, **caractérisé en ce que** la tête de réseau redondante (HElb, HE2b) est adaptée pour envoyer un message MME - Message Management Message Entries - à la première tête de réseau (HEla, HE2a), avec lequel le noeud de ligne électrique, notamment répéteur de ligne électrique, de préférence associé à la première tête de réseau (HEla, HE2a), est interrogé, et en l'absence de réponse au message MME décider de la défaillance de la capacité de communication de la première tête de réseau (HEla, HE2a).

6. Groupe de tête selon une des revendications 1 à 5, **caractérisé en ce que** la tête de réseau redondante (HElb, HE2b) attend pendant une période de temps prédéterminée en cas de détection d'une défaillance de la capacité de communication de la première tête de réseau (HEla, HE2a) avant de prendre en charge la gestion de la cellule de ligne électrique, et que la tête de réseau redondante (HElb, HE2b) après l'écoulement de la période de temps prédéterminée vérifie à nouveau la capacité de communication de la première tête de réseau (HEla, HE2a).

7. Groupe de tête de réseau selon une des revendications 1 à 6, **caractérisé en ce que** la tête de réseau redondante (HElb, HE2b) surveille de préférence périodiquement la capacité de communication de la première tête de réseau (HEla, HE2a) après avoir pris en charge la gestion de la cellule de ligne électrique et dès la détection de la présence de la capacité de communication de la première tête de réseau (HEla, HE2a) met fin à la gestion de la cellule de ligne électrique.

8. Répéteur pour se connecter à un groupe de tête de réseau selon une des revendications 1 à 7, dans lequel le répéteur (RPla, RPlb, RP2a, RP2b) présente une interface de ligne électrique, dans lequel le répéteur (RPla, RPlb, RP2a, RP2b) est configuré pour s'enregistrer via son interface de ligne électrique auprès d'une tête de réseau primaire ou d'une tête de réseau secondaire, dans lequel la tête de réseau primaire est de préférence formée par la première tête de réseau (HEla, HE2a) du groupe de tête de réseau (6, 6') et la tête de réseau secondaire est de préférence formée par la tête de réseau redondante (HElb, HE2b) du groupe de tête de réseau (6, 6'), dans lequel le répéteur (RPla, RPlb, RP2a, RP2b) lorsque la tête de réseau primaire est joignable s'enregistre auprès de la tête de réseau primaire et lorsque la tête de réseau primaire n'est pas joignable s'enregistre auprès de la tête de réseau secondaire.

9. Répéteur selon la revendication 8, **caractérisé en ce que** le répéteur est configuré comme un répéteur redondant (RP1b, RP2b) pour un premier répéteur (RPla, RP2a), dans lequel le répéteur redondant (RP1b, RP2b) surveille une capacité de communication du premier répéteur (RPla, RP2a) et lors de la détection d'une défaillance de la capacité de communication des premiers répéteurs (RPla, RP2a) prend le relais des tâches de traitement du premier répéteur (RPla, RP2a), notamment les tâches de traitement et/ou de retransmission.

10. Système de ligne électrique pour un réseau d'alimentation électrique, en particulier un réseau à moyenne tension, comprenant une pluralité de tronçons de lignes électriques (2, 2'), qui sont respectivement configurées sur des tronçons du réseau d'alimentation électrique et connecte respectivement au moins deux stations nodales (3, 3', 3") à l'intérieur du réseau d'alimentation électrique communiquant par une communication de ligne électrique, dans lequel au moins un des tronçons de ligne électrique (2, 2') comprend :
un groupe de tête de réseau (6, 6') selon une des revendications 1 à 7, dans lequel la première tête de réseau (HEla, HE2a) ou la tête de réseau redondante (HElb, HE2b) du groupe de tête de réseau (6, 6') gère une cellule de ligne électrique formée sur le tronçon de ligne électrique (2, 2'), et
au moins un répéteur (RPla, RP2a, RPlb, RP2b), qui est situé à distance du groupe de tête de réseau (6, 6') et traite un signal de ligne électrique reçu du réseau d'alimentation électrique, dans lequel le au moins un répéteur (RPla, RP2a, RPlb, RP2b) s'enregistre auprès du groupe de tête de réseau (6, 6') et dans lequel un ou plusieurs d'au moins un répéteur est/sont formé(s) de préférence selon la revendication 8 ou 9.

11. Système de ligne électrique selon la revendication 10, **caractérisé en ce qu'**un groupe de tête de réseau (6, 6') et/ou un ou plusieurs des au moins un répéteur (RPla, RPlb, RP2a, RP2b) sont agencés dans une de la pluralité de stations nodales (3, 3', 3"), dans lequel les interfaces de ligne électrique de ces unités sont connectées au réseau d'alimentation électrique et l'interface réseau au moyen d'un commutateur (9, 9', 9") de sorte qu'elles communiquent entre elles, dans lequel le commutateur (9, 9', 9") est de préférence adapté pour détecter et rompre des boucles de réseau, de préférence en utilisant STP - Spanning Tree Protocol - ou RSTP - Rapid Spanning Tree Protocol.

12. Système de ligne électrique selon la revendication 10 ou 11, **caractérisé en ce que** deux tronçons de lignes électriques adjacentes (2, 2') sont connectés dans une station nodale - station intermédiaire (3'), dans lequel dans la station intermédiaire (3') le groupe de tête de réseau (6') d'un des deux tronçons de ligne électrique adjacents (2') et un ou plusieurs des au moins un répéteur (RPla, RP1b) de l'autre des deux tronçons de ligne électrique adjacents (2) sont agencés et connectés pour communiquer via leur interface réseau.

13. Système de de ligne électrique selon une des revendications 10 à 12, **caractérisé en ce que** dans une des stations nodales - station de liaison montante (3) - une connexion à un autre réseau, de préférence un réseau dorsal (5), peut être réalisée.

14. Système de de ligne électrique selon une des revendications 10 à 13, **caractérisé en ce que** les multiples tronçons de de ligne électrique (2, 2') établissent respectivement des connexions point à point entre deux stations nodales (3, 3', 3") et la pluralité de tronçons de ligne électrique (2, 2') forment une chaîne et/ou un anneau de connexions point à point.

15. Système de ligne électrique selon une des revendications 10 à 14, **caractérisé en ce que** la tête de réseau redondante (HElb, HE2b) est configurée pour basculer la communication de ligne électrique dans un mode dans lequel la communication est moins sensible aux perturbations sur le réseau d'alimentation électrique.
